Europäisches Patentamt

**European Patent Office**

**Office européen des brevets**

(19)

(11) Publication number: **0 201 526**
**B1**

(12) # EUROPEAN PATENT SPECIFICATION

(45) Date of publication of the patent specification:
**10.08.88**

(51) Int. Cl.⁴: **B 62 D 49/00** // **B62D61/10**

(21) Application number: **85905215.1**

(22) Date of filling: **25.10.85**

(86) International application number:
**PCT/FI 85/00083**

(87) International publication number:
**WO 86/02893 (22.05.86 Gazette 86/11)**

(54) **TRACTOR WITH SLIP STEERING.**

(30) Priority: **07.11.84 FI 844376**

(43) Date of publication of application:
**20.11.86 Bulletin 86/47**

(45) Publication of the grant of the patent:
**10.08.88 Bulletin 88/32**

(84) Designated Contracting States:
**AT BE CH DE FR GB IT LI LU NL SE**

(56) References cited:
**EP-A-0 061 438**
**JP-A-58 004 675**
**US-A-3 414 072**
**US-A-3 442 345**

(73) Proprietor: **CARLSON PROJECT KB. KY., SF- 65760 Iskmo (FI)**

(72) Inventor: **CARLSON, Mats, SF- 65760 Iskmo (FI)**

(74) Representative: **Smulders, Theodorus A.H.J., Vereenigde Octrooibureaux Nieuwe Parklaan 107, NL- 2587 BP 's- Gravenhage (NL)**

EP 0 201 526 B1

LIBER, STOCKHOLM 1988

## Description

The present invention is concerned with a tractor with slip steering, comprising a bogie-borne frame, which carries a driving cab and a drive package for the transmission of the drive power to the wheels of the vehicle.

Slip-steered tractors known in prior art are, as a ruled provided with two wheels per side only, which said wheels have no spring system at all, so that no individual movement of any of the wheels in the vertical direction is permitted. This results in the circumstance that all irregularities in the road are transferred to the tractor body. Moreover, attempts have been made to place the wheels at the same side as close to each other as possible in order to reduce the effect of the counterforce that always acts upon the wheels of a slip-steered tractor during a turning maneuver. As a result of this, a tractor with highly unstable and shaky running is obtained. For example, when the tractor runs over an irregularity in the ground, it is readily set in a strong swinging movement, whereby its front wheels and its rear wheels rise off the ground alternatingly. If the swinging becomes excessively intensive, there is a risk of overturning of the tractor. Moreover, as long as the tractor is in such a swinging movement, it is practically completely unmaneuverable. The only mode of eliminating such a swinging movement is complete stopping of the tractor. Owing to these drawbacks, such a tractor may be driven only at a very low speed on a public highway.

The object of the present invention is to eliminate these problems, which is achieved by means of a tractor with slip steering, which is characterized in that, at each side, the tractor is provided with two driven wheels suspended on a longitudinal bogie, and additionally with at least one wheel per side, suspended at the respective ends of one and the same transverse axle, which said axle is, approximately at the middle, vertically pivotably, suspended on an extra frame rigidly connected to one end of the frame proper of the tractor, the free end of the said extra frame being provided with fastenings for working implements. Such a tractor has a very stable run without any tendency of swinging, and a relatively good spring action because both of the longitudinal bogies and the vertically pivotable axle absorb road irregularities in a satisfactory way.

The other characteristics of the invention come out from the accompanying patent claims.

In the following, the invention will be described in more detail with reference to the accompanying drawing, wherein

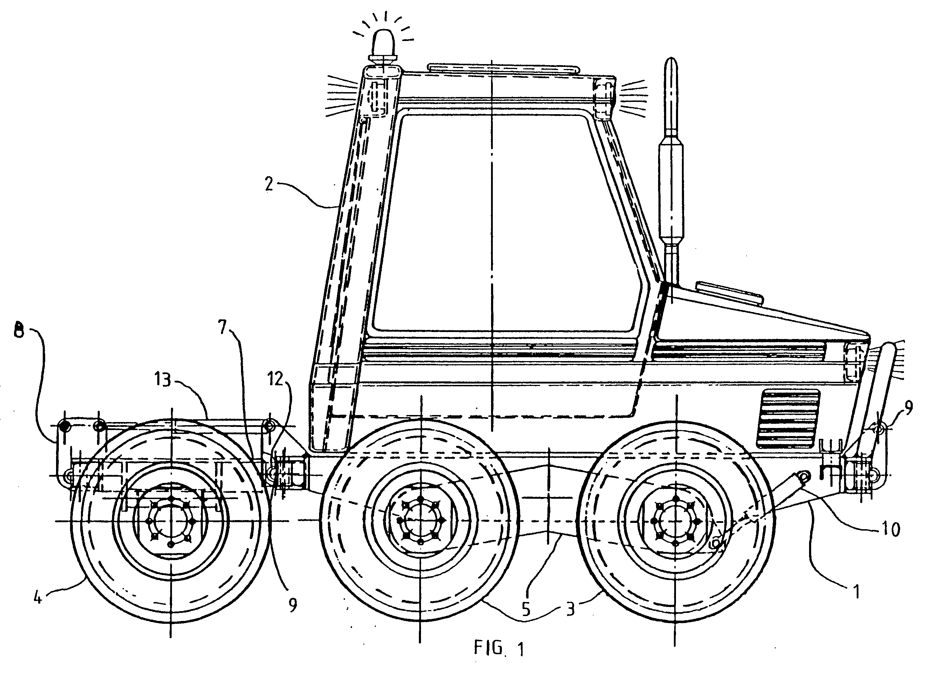

Fig. 1 shows an example of a tractor in accordance with the invention as viewed from the side,

Fig. 2 shows the tractor of Fig. 1 as viewed from the right, and

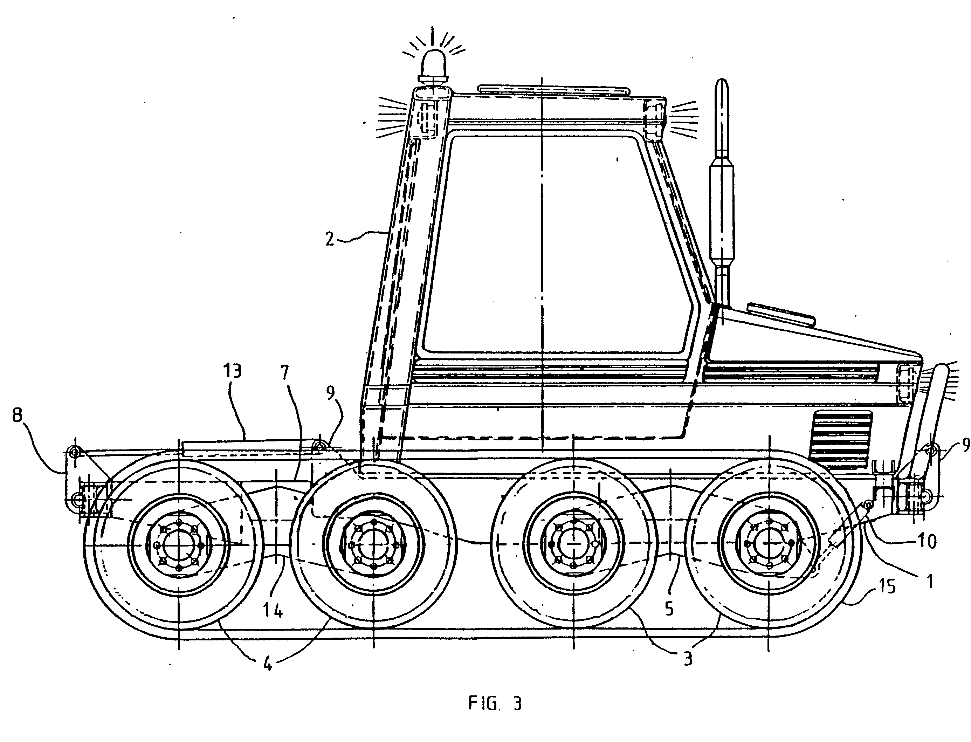

Fig. 3 shows another example of a tractor in accordance with the invention as viewed from the side.

The slip-steered tractor comprises a bogie-borne frame 1, which carries the driving cab 2 and a drive package that supplies the vehicle wheels 3, and possibly 4, with drive power. The drive package comprises preferably a diesel engine, which drives either two adjustable hydraulic pumps or possibly one or two electric generators. The hydraulic pumps or the electric generators are supposed to transmit the drive power to the hydraulic or electric motors of the tractor, which are arranged so that they drive their respective wheels or wheel groups. The tractor is provided either with one motor per bogie 5 or one motor per wheel 3, depending on the magnitude of the drive power that is desired and required per wheel 3. It is characteristic of the tractor in accordance with the invention that, at each side, the tractor is provided with two driven wheels 3 suspended on a longitudinal bogie 5, and additionally with at least one wheel 4 per side, suspended at the respective ends of one and the same transverse axle 6. The transverse axle 6 is, approximately at the middle, vertically freely pivotably suspended on an extra frame 7, which is rigidly connected to one end of the frame 1 proper of the tractor. The extra frame 7 is, at its free end, provided with fastenings 8 for working implements of different kinds, such as agricultural implements, excavators, trailers, front loaders, and equivalent.

The slip-steered tractor is steered thereby that the driving wheels 3 at one side of the tractor are made to revolve at a higher or lower speed of rotation as compared with the wheels 3 at the other side, depending on the direction in which the tractor is to be turned. The maneuvering of the vehicle takes place appropriately by means of a T-shaped maneuver lever, which acts, e.g., upon the two hydraulic pumps of the tractor so that they feed hydraulic fluid in one direction when the maneuver lever is moved forwards, and in the opposite direction when the lever is moved rearwards, whereby the magnitude of the volumetric flow depends on the extent to which the maneuver lever is shifted from its starting position in the direction concerned. By turning the maneuver lever around its longitudinal axis, volumetric flows of different magnitudes and possibly of opposite directions are produced through the two hydraulic pumps. Thus, the speeds of rotation of the hydraulic motors and, thus, of the wheels 3 are proportional to the said volumetric flows.

The coupling member between the frame 1 proper of the tractor and the extra frame 7 is preferably of a quick-coupling type. By providing both ends of the frame 1 proper with identical quick coupling members 9, it is possible to couple the extra frame 7 either at the front or at the rear of the tractor. By means of this arrangement, the possibilities of use of the tractor are increased remarkably, as the stabilizing extra frame 7 can be coupled to the end of the tractor at which a higher stability is required, or if it is desirable to distribute the gravitational effect of the vehicle in a different way.

In order to improve the carrying capacity of the vehicle and to reduce its wheel load, it is possible to suspend a longitudinal bogie 14 at each end of the transverse axle 6, so that the tractor receives four wheels 3, 4 per side.

As required, the wheels 4, which are directly or indirectly mounted at the end of the transverse axle 6, may be driven or non-driven. In particular if the wheels 4 are also suspended on a bogie 14, it is appropriate that all the wheels of the tractor are driven, which also increases the running capability of the vehicle in difficult terrain.

By at each side mounting a hydraulic cylinder-piston device 10 between the frame 1 of the tractor and, e.g., the front end of the longitudinal bogie 5 at the side concerned, a possibility is obtained to adjust and to lock the bogie 5 at the side concerned in different angular positions. When the cylinder-piston devices 10 are connected free, they have a spring action. With the aid of these cylinder-piston devices 10, an even higher stability and better maneuverability are obtained for the tractor. When the tractor, eg. with a working implement coupled at the rear, is to turn on a field, both of the hydraulic cylinder-piston devices 10 are first activated so that the front ends of the two longitudinal bogies 5 are pulled upwards, whereby the rear wheel of each bogie is, at the same time, pressed down so that the weight of the tractor is concentrated on these wheels, whereupon the turning maneuver itself is performed. In this way, it is possible to make the tractor turn around practically on the spot when speeds of rotation of different magnitudes and possibly of opposite directions are applied to the said two wheels. The cylinder-piston devices 10 may also be utilized in order to obtain a desired distribution of weight when work is performed by means of some working implement coupled to the tractor. The separately maneuverable cylinder-piston devices 10 may also be used when the tractor is to be coupled to a working implement.

In view of increasing the driving comfort of the vehicle further, the extra frame 7 may be suitably provided with an articulated joint 12, which permits pivoting of this extra frame 7 in the vertical direction in relation to the frame 1 proper of the tractor. In such a case, a substantially horizontal cylinder-piston device 13 is connected between the two frames 1 and 7, whereby a so-called parallellogram coupling is obtained. In the free position, this cylinder-piston device 13 acts as a spring counteracting the swinging of the joint 12, but by activating the device 13, it is possible to lock the frame 7 in different angular positions relative the frame 1.

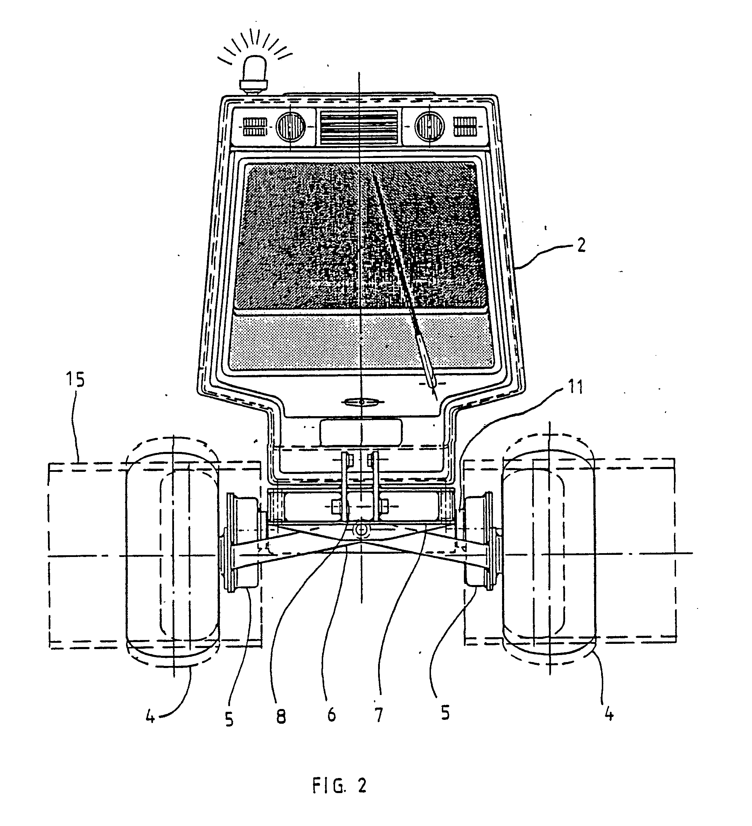

When the tractor is used as a piste machine or for collecting of peat, it is appropriate to provide it with crawler belts 15 which enclose all the wheels 3 and 4 at each side. In Fig. 2, it is shown with broken lines how the tractor can be provided with wheels of different dimensions and with crawler belts.

As a result of the peculiar mode of operation of the tractor, it can be driven with an equally high speed both forwards and rearwards. In order to facilitate the maneuvering of the tractor in this connection, it is appropriate to provide it with a driver's seat rotable around a vertical axis, to which said seat the maneuver lever of the vehicle is also coupled. Such a construction facilitates the driver's work considerably also in the case of plowing and equivalent, as the driver, with the seat in the tranverse direction, may look both forwards and rearwards.

The transverse axle 6 has preferably the shape of an inverted V, whereby the axle 6 is pivotably attached to the extra frame 7 by means of a shaft passing through the tip of the V in the longitudinal direction of the tractor.

## Claims

1. Tractor with slip steering, comprising a bogie-borne frame (1), which carries a driving cab (2) and a drive package for the transmission of the drive power to the wheels (3, 4) of the vehicle, characterized in that, at each side, the tractor is provided with two driven wheels (3) suspended on a longitudinal bogie (5), and additionally with at least one wheel (4) per side, suspended at the respective ends of one and the same transverse axle (6), which said axle is, approximately at the middle, vertically freely pivotably, suspended on an extra frame (7) rigidly connected to one end of the frame (1) proper of the tractor, the free end of the said extra frame (7) being provided with fastenings (8) for working implements.

2. Slip-steered tractor as claimed in claim 1, characterized in that the extra frame (7) can be coupled by means of a quick coupling (9) to either end of the frame (1) proper of the tractor.

3. Slip-steered tractor as claimed in claim 2, characterized in that a longitudinal bogie is suspended at each end of the transverse axle (6).

4. Slip-steered tractor as claimed in claim 2 or 3, characterized in that the wheels (4) attached to the transverse axle (6) directly or indirectly are non-driven wheels.

5. Slip-steered tractor as claimed in claim 2 or 3, characterized in that the wheels (4) attached to the transverse axle (6) directly or indirectly are driven wheels.

6. Slip-steered tractor as claimed in claim 2, characterized in that the longitudinal bogie (5) at each side is adjustable by means of a hydraulic cylinder-piston device (10) in different angular positions around a substantially transverse axel journal (11).

7. Slip-steered tractor as claimed in claim 6, characterized in that the extra frame (7) is provided with an articulated joint (12), which permits a swinging of this extra frame (7) in the vertical direction relative the frame (1) proper of the tractors whereby a substantially horizontal cylinder-piston device (13) is connected between the two frames (1 and 7) so that a parallellogram coupling is formed so as to attenuate and to lock the said swinging movement.

8. Slip-steered tractor as claimed in any of the preceding claims, characterized in that the tractor is at each side provided with a crawler belt which encloses all the wheels (3, 4) of the side concerned.

9. Slip-steered tractor as claimed in any of the preceding claims, characterized in that the tractor is provided with a hydrostatic drive which comprises an adjustable hydraulic pump for each side, which said pumps supply the drive power to the hydraulic motor or motors that drive the wheels (3, and possibly 4) at the side concerned.

**Patentansprüche**

1. Schlepper mit Gleitlenkung, versehen mit einem von einem Doppelachsaggregat getragenen Rahmen (1), der ein Fahrerhaus (2) und eine Antriebseinheit zum Übertragen der Antriebskraft auf die Räder (3, 4) des Fahrzeuges trägt, dadurch gekennzeichnet, dass der Schlepper auf jeder Seite mit zwei angetriebenen Rädern (3) versehen ist, die an einem länglichen Doppelachsaggregat (5) aufgehängt sind, und zusätzlich mit mindestens einem Rad (4) auf jeder Seite, das an den jeweiligen Enden ein und derselben Querachse (6) aufgehängt ist, welche Achse ungefähr in der Mitte vertikal frei drehbar an einem zusätzlichen Rahmen (7) aufgehängt ist, der mit einem Ende des eigentlichen Rahmens (1) des Schleppers starr verbunden ist, wobei das freie Ende des zusätzlichen Rahmens (7) mit Befestigungselementen (8) für Arbeitsgeräte versehen ist.

2. Schlepper mit Gleitlenkung nach Anspruch 1, dadurch gekennzeichnet, dass der zusätzliche Rahmen (7) durch eine Schnellkupplung (9) mit dem einen oder anderen Ende des eigentlichen Rahmens (1) des Schleppers verbunden werden kann.

3. Schlepper mit Gleitlenkung nach Anspruch 2, dadurch gekennzeichnet, dass ein längliches Doppelachsaggregat an jedem Ende der Querachse (6) aufgehängt ist.

4. Schlepper mit Gleitlenkung nach Anspruch 2 oder 3, dadurch gekennzeichnet, dass die an der Querachse (6) aufgehängten Räder (4) direkt oder indirekt nicht-angetriebene Räder sind.

5. Schlepper mit Gleitlenkung nach Anspruch 2 oder 3, dadurch gekennzeichnet, dass die an der Querachse (6) befestigten Räder (4) direkt oder indirekt angetriebene Räder sind.

6. Schlepper mit Gleitlenkung nach Anspruch 2, dadurch gekennzeichnet, dass das längliche Doppelachsaggregat (5) auf jeder Seite durch eine hydraulische Zylinderkolbeneinrichtung (10) auf verschiedene Winkelstellungen um einen im wesentlichen quer verlaufenden Achszapfen (11) einstellbar ist.

7. Schlepper mit Gleitlenkung nach Anspruch 6, dadurch gekennzeichnet, dass der zusätzliche Rahmen (7) mit einer Gelenkverbindung (12) versehen ist, die ein Schwenken dieses zusätzlichen Rahmens (7) in der vertikalen Richtung relativ zum eigentlichen Rahmen (1) des Schleppers ermöglicht, wobei eine im wesentlichen horizontale Zylinderkolbeneinrichtung (13) zwischen den beiden Rahmen (1 und 7) so verbunden ist, dass eine Parallelogrammkupplung gebildet wird, um die Schwenkbewegung zu dämpfen und zu blockieren.

8. Schlepper mit Gleitlenkung nach einem der vorhergehenden Ansprüche, dadurch gekennzeichnet, dass der Schlepper auf jeder Seite mit einer Laufkette versehen ist, die alle Räder(3, 4) der jeweiligen Seite umschliesst.

9. Schlepper mit Gleitlenkung nach einem der vorhergehenden Ansprüche, dadurch gekennzeichnet, dass der Schlepper mit einem hydrostatischen Antrieb versehen ist, der eine einstellbare hydraulische Pumpe für jede Seite umfasst, welche Pumpen die Antriebskraft an den bzw. die hydraulischen Motor(en) liefern, von dem bzw. denen die Räder (3, und möglicherweise 4) auf der jeweiligen Seite angetrieben werden.

**Revendications**

1. Un tracteur à direction à glissement comprenant un châssis (1) porté par un bogie, lequel châssis supporte une cabine du conducteur (2) et un ensemble d'entraînement pour la transmission de la puissance d'entraînement aux roues (3, 4) du véhicule, caractérisé en ce que le tracteur est muni de chaque côté de deux roues entraînées (3) suspendues à un bogie longitudinal (5) et en outre d'au moins une roue (4) par chaque côté, suspendue aux extrémités respectives du même axe transversal (6), ledit axe, environ au milieu, étant suspendu pour mouvement pivotant vertical libre à un châssis supplémentaire (7) raccordé rigidement à une extrémité du châssis (1) propre du tracteur, l'extrémité libre dudit châssis supplémentaire (7) étant muni d'attaches (8) pour des instruments de travail.

2. Un tracteur à direction à glissement selon la revendication 1, caractérisé en ce que le châssis supplémentaire (7) peut être raccordé, à l'aide d'un raccord rapide (9), à l'une ou l'autre extrémité du châssis (1) propre du tracteur.

3. Un tracteur à direction à glissement selon la revendication 2, caractérisé en ce qu'un bogie longitudinal est suspendu·à chaque extrémité de l'axe transversal (6).

4. Un tracteur à direction à glissement selon la revendication 2 ou 3, caractérisé en ce que les roues (4) attachées à l'axe transversal (6) directement ou indirectement sont des roues non entraînées.

5. Un tracteur à direction à glissement selon la revendication 2 ou 3, caractérisé en ce que les roues (4) attachées à l'axe transversal (6) directement ou indirectement sont des roues entraînées.

6. Un tracteur à direction à glissement selon la revendication 2, caractérisé en ce que le bogie longitudinal (5) est réglable de chaque côté à l'aide d'un dispositif cylindre-piston hydraulique (10) dans des positions angulaires différentes autour d'un arbre (11) substantiellement transversal.

7. Un tracteur à direction à glissement selon la revendication 6, caractérisé en ce que le châssis supplémentaire (7) est muni d'un joint articulé (12) permettant un virement dudit châssis supplémentaire (7) en direction verticale par rapport au châssis (1) propre du tracteur, alors qu'un dispositif cylindre-piston (13) substantiellement horizontal est installé entre les deux châssis (1 et 7) ainsi formant un accouplement par parallélogramme pour atténuer et bloquer ledit mouvement de virement.

8. Un tracteur à direction à glissement selon l'une quelconque des revendications précédentes, caractérisé en ce que le tracteur est muni de chaque côté d'une chenille enfermant toutes les roues (3, 4) du côté en question.

9. Un tracteur à direction à glissement selon l'une quelconque des revendications précédentes, caractérisé en ce que le tracteur est muni d'un entraînement hydrostatique comprenant une pompe hydraulique régable pour chaque côté, lesdites pompes fournissant la puissance d'entraînement au (x) moteur (s) hydraulique (s) qui entraîne (s) les roues (3 et possiblement 4) du côté en question.

FIG. 1

0 201 526

FIG. 2

FIG. 3

0 201 526